# EUROPEAN PATENT APPLICATION

(11) **EP 3 079 069 A1**
(43) Date of publication of application: **12.10.2016**
(21) Application number: 14852785.6
(22) Date of filing: 04.05.2014
(51) Int. Cl.: G06F 13/00

(54) **DEVICE SUPPORTING SEAMLESS CONNECTION BETWEEN INTERACTIVE INTERCONNECTED SYSTEM AND WIFI**

(30) Priority: 08.10.2013 CN 201320626542 U; 08.10.2013 CN 201320626594 U; 04.03.2014 CN 201420104743 U; 04.03.2014 CN 201420104784 U
(71) Applicant: Yau, Yim Wai, N.T., Hong Kong (CN)
(72) Inventor: Yau, Yim Wai, N.T., Hong Kong (CN)
(74) Representative: ProI European Patent Attorneys
(86) International application number: PCT/CN2014/076732
(87) International publication number: WO 2015/051636

(57) **Abstract**

The present invention relates to an information associated technology supporting multi-media products, in particular to a multimedia information signal supporting seamless connection between an interactive interconnected system and wireless fidelity (WIFI).The multimedia information signal is synthesized by associated data and multimedia information data, characterized in that, the interactive interconnected system consists of a multimedia information signal, an electronic reading device and an electronic transmitter-receiver; the multimedia information signal is a combination of multimedia information data and associated data; the multimedia information data supports a combination of digital data, video data, audio data and programming data, etc.; the associated data includes a URI (Uniform Resource Identifier) and associated data-oriented programming command; and the associated data reception circuit is equipped with a WIFIshort-distance signal transmission-reception circuit supported by a WIFI device.

## Description

### BACKGROUND OF THE INVENTION

### Technical Field

The present invention relates to information associated technologies of multi-media products, in particular to a multimedia information signal supporting seamless connection between an interactive interconnected system and wireless fidelity (WIFI), realizing development of information accessibility.

### 2. Description of Related Art

As the continuous development of social technologies, local governments have made the new planning of "Smart City, Quality Life". However, "Smart City, Quality Life" is only an objective, which is achieved with the support of related smart system technologies.

However, mobile Internet is not the mobilization of the Internet, but refers to a general term of activities of combination and practice of the technologies, platform, business mode and application of the Internet and communication technologies.

### What is the actual situation?

The development of electronic media has serious defects and disadvantages. Due to a lack of related technical support of interconnection of multi-media information, the so-called full media only refers to making an electronic copy of the content of print media information and providing users with choices.

The transmission capabilities of traditional media advertisements are obviously lagging behind electronic media, but electronic media is never an "ultimate media form, which can replace any one media such as traditional paper media, traditional broadcast, TV and Internet" as some people hoped.

WIFI (Wireless Fidelity) is a technology capable of realizing wireless connection among terminals such as a personal computer, a hand-held device (for example, PDA, mobile phone), etc. WIFI is a wireless networking technology. Previously, the Internet was connected with a computer through a cable. Now, networking is obtained through wireless waves. Within the effective coverage of the waves, networking can be obtained through WIFI.

The secondary positioning of the WIFI technology is supplement of cellular mobile communication. In some special circumstances, high-speed data transmission must be carried out with WIFI, for example, the wireless local network in a plane and the wireless local network within a high-speed train put forward by Boeing.

It is predicted that WIFI devices will cover more areas. Information accessibility includes two main domains. One is network accessibility. Accessibility construction of a website belongs to the domain of network accessibility. The other is electronic and information technology accessibility, which means solving the seamless connection of multimedia.

The Internet Society of China gives this definition: Information accessibility refers to that any one (no matter healthy people or the disabled, no matter younger people or old people) can equally and conveniently obtain and use information without barriers in any circumstances.

However, a smart phone is needed to log in the related electronic Internet of the multi-media product information. To obtain rich related data through epitaxy, associated technology is a necessity. Associated technology and transmission technology are two technical purposes of different concepts.

At present, the associated technology available on the market takes the QR code pattern technical solution as the mainstream. The QR code pattern technical solution already has mature products and industrial chain, but there are many condition limits in use of the technology during practical operation... For example, the screen and website of a video product is implanted with a QR code pattern... During practical operation, the display time of the QR code pattern on the electronic screen is very short, and users have difficulties in operation.

Besides, the QR code pattern cannot solve the broadcasting (audio information technology) associated of multimedia information signals.

According to Mr. Niu Wenyuan, consultant of the State Council and academician of the Third World Academy of Sciences, by the end of 2011, China has 154 cities planned to construct smart cities with an investment of 1500 billion yuan. However, none of those cities shows the intention of the plan.

The current time is a human-machine interaction time with rapid development technologies. At public places of various cities, various hot spots providing WiFi service have been integrated in daily life. Along with the integration of mobile networks and fixed network, a person can get on the Internet at any time through a smart phone, fulfilling the objective of smart city development. Solving information accessibility is an incredible technical threshold. In order to fulfill the objective of information accessibility...

Therefore, meeting any demands at any time and any place easier with easier, quicker and better interconnection technologies is an urgent expectation on the market.

### BRIEF SUMMARY OF THE INVENTION

To fulfill the above objective, the prevent invention provides a multimedia information signal supporting seamless connection between an interactive interconnected system and wireless fidelity (WIFI), wherein the multimedia information signal is synthesized by associated data and multimedia information data, characterized in that,
the interactive interconnected system consists of a multimedia information signal, an electronic reading device and an electronic transmitter-receiver;
the multimedia information signal is a combination of multimedia information data and associated data;
the multimedia information data supports a combination of digital data, video data, audio data and programming data, etc.;
the associated data includes a URI (Uniform Resource Identifier) and associated data-oriented programming command;
the electronic reading device is comprised of a combination data reception circuit, a combination data decomposition circuit and a transmission circuit; the combination data reception circuit is configured to receive the multimedia information signal; the combination data decomposition circuit is configured to decompose the multimedia information signal into the multimedia information data and the associated data ; the decomposed associated data is transmitted to the electronic transmitter-receiver via the transmission circuit;
the electronic transmitter-receiver is comprised of an associated data reception circuit, an associated data transmission circuit and a central processing unit with a memory;
the associated data reception circuit is equipped with a WIFIshort-distance signal transmission-reception circuit supported by a WIFI device;
the multiple replication and cyclic transmission are set for the associated data within reading time of the multimedia information data;
the URI (Uniform Resource Identifier) is a URI supporting Internet connection;
the URI is communication data supporting connection with the telecommunication network;
the associated data is set to read an electronic code, reading different electronic codes correspond to the different associated data, and the different associated data is set for the different URIs respectively;
the associated address data is associated hybrid data capable of being mixed with content data such as characters, images, audio and video, and the associated hybrid data is decomposed into the associated data by an associated hybrid data decomposition circuit;
the multimedia information signal is transmitted by a signal transmission station and a signal transmission transfer device;
the multimedia information signal is stored in an electronic storage device, and is read by a multimedia electronic product supporting the interactive interconnected system;
the electronic reading device is provided with an associated data-oriented program supporting storage and change of code data and password data of the WIFI device;
the associated data-oriented programming command activates the associated data-oriented program; the associated data is processed and transformed to the orientation associated data; and the orientation associated data is transmitted by the short-distance signal transmission-reception circuit disposed in the transmission circuit;
a communication terminal product receives the orientation associated data and processes the orientation associated data to wireless fidelity (WIFI) associated data; and the wireless fidelity (WIFI) associated data is transmitted to wireless fidelity (WIFI) device by the short-distance signal transmission-reception circuit disposed in the transmission circuit;
the multimedia information data and the associated data are processed with an encrypted synthesis method.

The present invention provides a multimedia information signal supporting seamless connection between an interactive interconnected system and wireless fidelity (WIFI), solving interconnection among the multi-media information products and fulfilling the objective of information accessibility.
1. Corresponding orientation associated data is acquired from different types of information supporting the media-oriented product of the interactive interconnected system through the communication terminal product, processed into WIFI associated data and synchronously transmitted to the WIFI settings. Electronic documents associated to the WIFI associate data in the Internet are obtained through WIFI settings, which is the technical support for acquiring information randomly at any time and any place.
2. Technical combination features of the interactive associated system: the functions of the original product are not changed; after combination, the functions can support one another, so an obvious technical effect is obtained; the simplest point-to-point associated technology realizes the information accessibility interconnection of the multi-media product, with interconnection capabilities obviously better than the QR code and other associated technical solution on the market.

The present invention can be combined with applications by various means (all-media product), effectively solving the technical problem of information choke of the mobile information development. The media-oriented product is selected from the current product resources on the market (including print media product, multi-media electronic product, video electronic products, audio electronic products, etc.)

### BRIEF DESCRIPTION OF THE SEVERAL VIEWS OF THE DRAWINGS

Figure 1A is a working diagram in which a communication terminal product acquires single associated data.
Figure 1B is a schematic diagram in which a communication terminal product acquires single associated data.
Figure 1C is a working diagram in which a communication terminal product acquires multiple associated data.
Figure 1D is a schematic diagram in which a communication terminal product acquires multiple associated data.
Figure 2A is a schematic diagram of the information signal supporting the interactive interconnected system.
Figure 2B is a schematic view of technical applications of the interactive interconnected system.
Figure 3A is a schematic view of technical operation of the interactive interconnected system.
Figure 3B is a schematic view of technical operation of seamless connection between the interactive interconnected system and WIFI.
Figure 4A is a schematic view of application of the interactive interconnected system and the media-oriented product.
Figure 4B is an effect diagram of a public traffic facility for providing the visually impaired people with direction orientation.

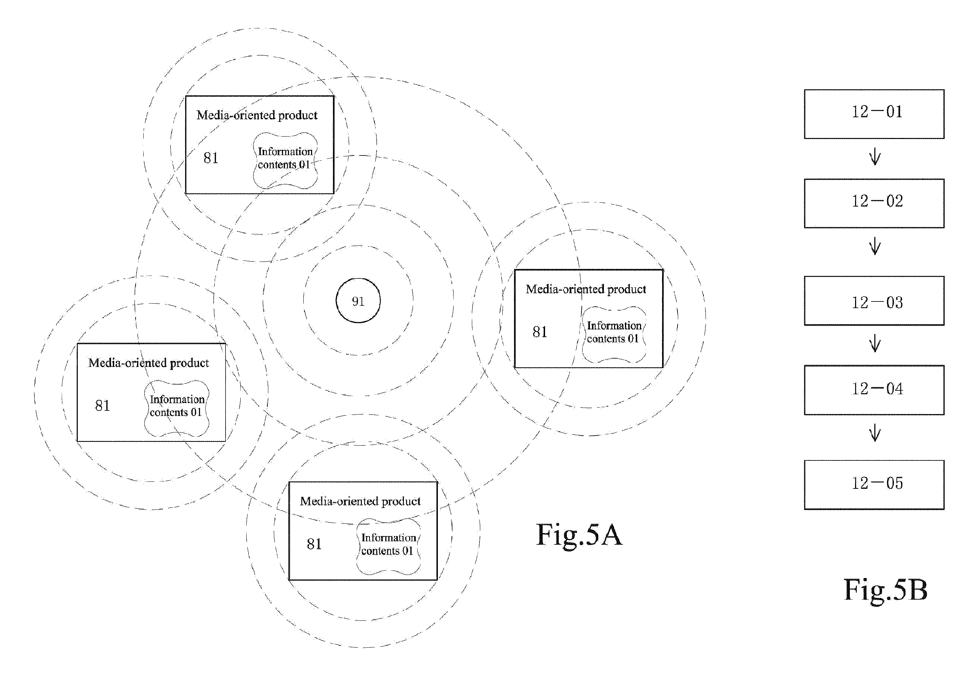

Figure 5A is an effect diagram of seamless connection between the interactive interconnected system and WIFI.
Figure 5B is a schematic view of technical operation of seamless connection between the interactive interconnected system and WIFI.

### DETAILED DESCRIPTION OF THE INVENTION

The following embodiments are further explanations and descriptions of the present invention, and do not constitute any limit in the present invention.

The present invention provides a multimedia information signal supporting seamless connection between an interactive interconnected system and wireless fidelity (WIFI), wherein the multimedia information signal 01 is synthesized by associated data 12 and multimedia information data, characterized in that,
the interactive interconnected system consists of a multimedia information signal, an electronic reading device 02 and an electronic transmitter-receiver 03;
the multimedia information signal 01 is a combination of multimedia information data and associated data 12;
the multimedia information data supports a combination of digital data 08, video data 10, audio data 11 and programming data 15, etc.;
the associated data includes a URI (Uniform Resource Identifier) and associated data-oriented programming command.

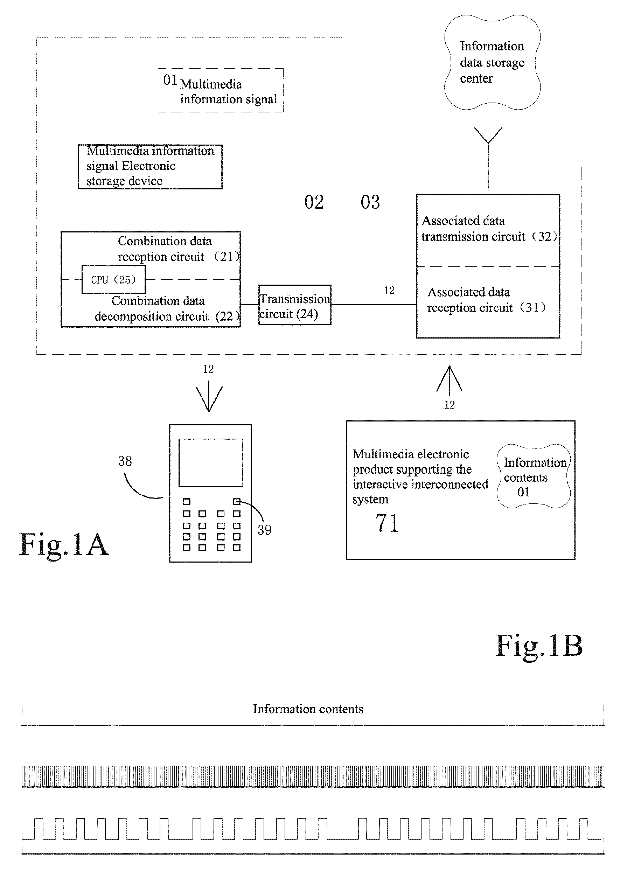

As shown in Figure 1A, the electronic reading device is comprised of a combination data reception circuit 21, a combination data decomposition circuit 22 and a transmission circuit 24; the combination data reception circuit is configured to receive the multimedia information signal; the combination data decomposition circuit 22 is configured to decompose the multimedia information signal into the multimedia information data and the associated data 12; the decomposed associated data is transmitted to the electronic transmitter-receiver via the transmission circuit 24;
the electronic transmitter-receiver is comprised of an associated data reception circuit 31, an associated data transmission circuit 32 and a central processing unit with a memory;
the associated data reception circuit 31 is equipped with a WIFIshort-distance signal transmission-reception circuit supported by a WIFI device.

As shown in Figure 1B, one piece information content is included in the figure; the information content is only needed to have one associated data (namely one URI);
the multiple replication and cyclic transmission are set for the associated data within reading time of the multimedia information data.

The URI (Uniform Resource Identifier) is a URI supporting Internet connection.

### Get on the Internet.

The URI is communication data supporting connection with the telecommunication network.

### Get on the telecommunication network.

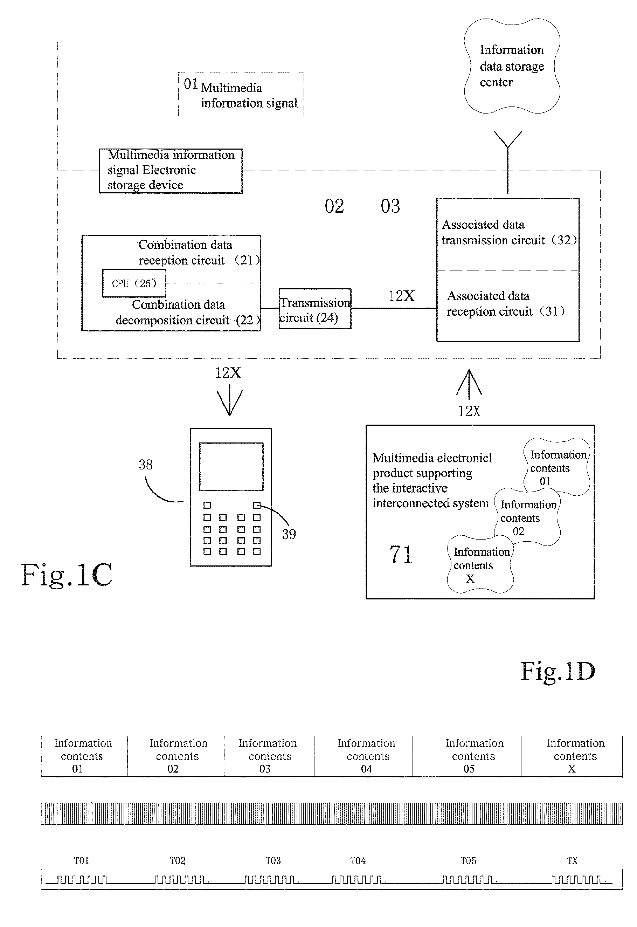

As shown in Figure 1C, the associated data is an associated data group 12X with more than one associated data combination, and the different associated data is set for the different URIs respectively.

The associated data is set to read an electronic code 14, reading different electronic codes correspond to the different associated data, and the different associated data is set for the different URIs respectively.

The associated address data is associated hybrid data 12M capable of being mixed with content data such as characters, images, audio and video, and the associated hybrid data 12M is decomposed into the associated data by an associated hybrid data decomposition circuit.

As shown in Figure 1D, six pieces of information content are included; the six pieces of information content correspond to six associated data (namely six URIs). Different URIs are associated with different electronic solutions. URI T01 corresponds to information content 01. URI T05 corresponds to information content 05. URI TX corresponds to information content X.

The multiple replication and cyclic transmission are set for the different associated data within reading time of the six pieces of media information content.

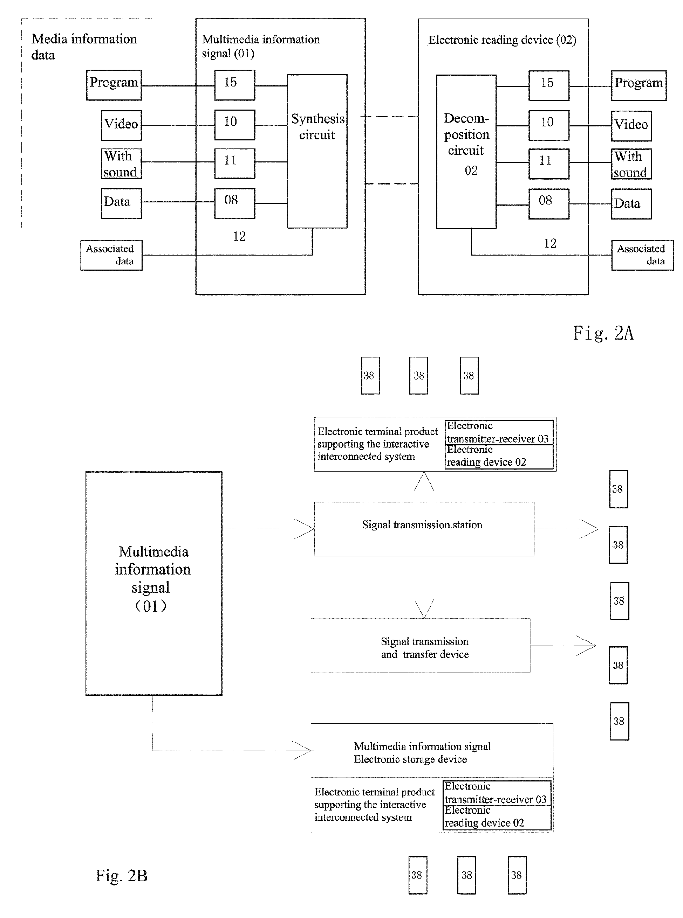

As shown in Figure 2B, the multimedia information signal is transmitted by a signal transmission station and a signal transmission transfer device.

The associated data received by the electronic transmitter-receiver come from various transmission means.

The multimedia information signal is stored in an electronic storage device, and is read by a multimedia electronic product supporting the interactive interconnected system.

Electronic storage devices include electronic auxiliary products such as mobile storage discs and optical discs.

The technical solution of the traditional public traffic facilities has many defects.

### Embodiment 01

A multi-media electronic product 71 displays a multi-media program. To bring convenience to users who log in a website (or a service center) of related information content through a communication terminal product (smart phone) to search more details, or know more related content by making a call, the program has a prompt of the related website or telephone number, etc. The information is shown in a moment, so,
1. The majority of users have no time to record the information.
2. It is difficult for the visually impaired people to carry out the related operation.

In order to improve the transmission effect, various different solutions are available on the market. One is the QR code technical solution. When the multi-media electronic product displays a video program, the video program introduces various different information content, and a window screen is implanted with a QR code pattern (plane information technology), so users can conveniently log in the network (or service center) of the related information content through the communication terminal product (smart phone) to search more details. Operation steps are as follows.
1. Take a picture of the QR code pattern by using the smart phone, and the picture is processed and transformed to the URI.
2. Log in to the website of the related URI.
3. Carry out traditional webpage search operation. The practical operation is quite complicated and difficult.

The present invention has the following technical features: the functions of the original product are not changed, but used in a mutual interactive mode; the functions can support one another, so an obvious technical effect is obtained; and the simplest point-to-point associated technology realizes the information accessibility interconnection of the multi-media product.

The following are related embodiments of the present invention.

The electronic transmitter-receiver is comprised of an associated data reception circuit, an associated data transmission circuit and a central processing unit with a memory, and is embedded with a media-oriented product with independent operation.

The media-oriented product is a multi-media electronic product. The multi-media electronic product is provided with an associated data-oriented program; the associated data-oriented program supports storage and change of code data and password data of the WIFI device.

The multi-media electronic product can play multi-media information content.

The interactive interconnected system series of the present invention supports accessibility interconnection of all-media information. Media-oriented products include print media products, audio media products, video media products, multi-media products, etc. The involved application scope is very wide, including road signboard, tourist spot guide board, emergency service guide, public bus shelter and Taxi shelter.

Users can acquire the associated data from the media-oriented product supporting the interactive interconnected system from the smart phone (equivalent to the communication terminal product in the text) and synchronously transmits the associated data, achieving the point-to-point effect.

The present invention basically employs two operation methods for acquiring the associated data.
1st method: On the smart phone (within the effective scope), randomly press the interconnected operation key 39 (start the interactive interconnected system), then press the interconnected operation key 39, and next the electronic transmitter-receiver embedded in the smart phone can acquire the selected associated data (namely URI) from the electronic reading device.
2nd method: On the smart phone (within the effective scope), randomly press the interconnected operation key 39 (start the interactive interconnected system), then enter the corresponding number (read electronic code) according to the number (plane identifier) implanted through the information content, and then the electronic transmitter-receiver embedded in the smart phone can acquire the selected associated data (namely URI) from the electronic reading device.

Another operation is as follows. After completing the related steps of the first or second methods, the user presses the confirmation key, and then the electronic transmitter-receiver can acquire the selected associated data for storage acquired by the electronic reading device.

Then, the set associated electronic documents set can be quickly called out at any time. The associated data can be transmitted to the data storage center through the transmission circuit to quickly call out the set associated electronic documents to be displayed (or played) on the smart phone.

In order to solve the seamless connection between the interactive interconnected system and the WIFI device, the electronic reading device is provided with a associated data-oriented program supporting storage and change of code data and password data of the WIFI device.

The associated data-oriented programming command activates the associated data-oriented program; the associated data is processed and transformed to the orientation associated data 12A; and the orientation associated data 12A is transmitted by the short-distance signal transmission-reception circuit disposed in the transmission circuit.

The communication terminal product receives the orientation associated data and processes the orientation associated data to wireless fidelity (WIFI) associated data 12B; and the wireless fidelity (WIFI) associated data 12B is transmitted to wireless fidelity (WIFI) device by the short-distance signal transmission-reception circuit disposed in the transmission circuit.

As shown in Figure 2A, the combination data decomposition circuit of the electronic reading device decomposes the multimedia information signal into multimedia information data. The multimedia information data include the digital data 08, video data 10, audio data 11 and programming data 15, etc.

The digital data obtained after the decomposition of the multimedia information data is transmitted to the digital data system to be processed, and then transmitted to the related configurations for use.

The video data obtained after the decomposition of the multimedia information data is transmitted to the video data system to be processed, and then transmitted to the related configurations for use.

The audio data obtained after the decomposition of the multimedia information data is transmitted to the audio data system to be processed, and then transmitted to the related configurations for use.

The program data obtained after the decomposition of the multimedia information data is transmitted to the program data system to be processed, and then transmitted to the related configurations for use.

The WIFI device 91 is connected with a special data service center. The WIFI device receives the WIFI associated data, then is connected with the special data center through the Internet, and quickly calls out the electronic documents associated to the information content associated data.

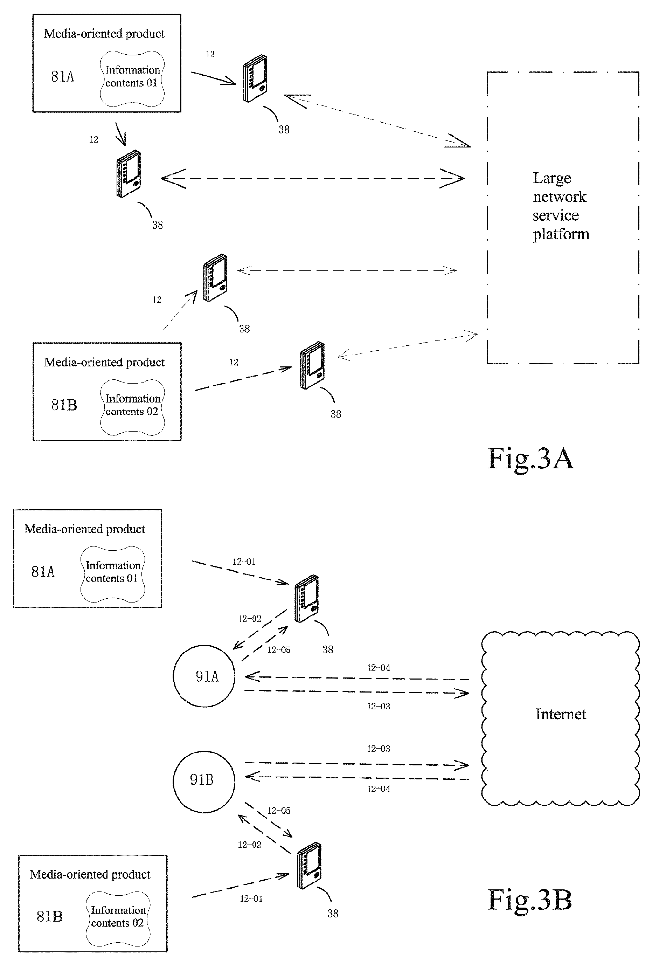

The electronic documents called out can be read through a visible electronic screen, including electronic terminal products supporting the interactive interconnected technologies, computer and communication terminal products.
Operation approaches of the interactive interconnected system
As shown in Figure 3A,

Operation 12-01: the communication terminal product receives the associated data 12 transmitted by the media-oriented product. Theoretically, the associated data is the URI.

Operation 12-02: the communication terminal product transmits the programmed associated data at the moment when receiving a result that the program processing of the associated data is completed. Theoretically, the associated data includes the URI and the combination of user identification data of the communication terminal product.

Operation 12-03: a network service platform provides related services according to the associated data.

If the associated data is the URI of the Internet, call out all associated electronic documents, and transmit those associated electronic documents back to the communication terminal product with the related user identification data.

If the associated data is the URI of the telecommunication network, connect the associated telephone and the communication terminal product with the related user identification data.

After the connection transfer is completed, the communication terminal product directly performs deeper dual-way interaction operation with the network service platform.

Operation 01 and operation 03 have time difference with operation 02. However, the transmission of the modern information data is very fast, so theoretically, users have no abnormal sensation.

The large network service platform includes the Internet, telecommunication network, broadcast network.
Operation approaches of seamless connection between the interactive interconnected system and WIFI
As shown in Figure 3B,

Operation 12-01: the communication terminal product receives the orientation associated data 12A transmitted by the media-oriented product. Theoretically, the orientation associated data includes combinations of WIFI device default code data, WIFI device password data, information content associated data, etc....

Operation 12-02: the terminal communication product generates another WIFI associated data 12B after receiving the result that the program processing of the orientation associated data is completed. Theoretically, the WIFI associated data includes combinations of the WIFI device password data, information content associated data, user identification data of the communication terminal product, etc., and is transmitted to the WIFI settings 91 by the short-distance signal transmission-reception circuit of the communication terminal product to be processed.

Operation 12-03: the WIFI settings 91 forwards the WIFI associated data to the Internet at the moment when receiving the WIFI associated data transmitted by the communication terminal product.

Operation 12-04: the Internet calls out the associated electronic documents according to the WIFI associated data, and transmits the documents back to the WIFI settings 91.

Operation 12-05: the WIFI settings 91 calls out the associated electronic documents, and transmits the associated electronic documents to the related communication terminal product according to the user identification data.

After the connection transfer is completed, the communication terminal product directly performs deeper dual-way interaction operation with the Internet.

Operation 01 and operation 05 have time difference with operations 02-04, but the transmission of the modern information data is very fast, so theoretically, users have no abnormal sensation.

Visually impaired people are the most vulnerable group among the disabled. To urge the visually impaired people to equally participate in society, the educational level of the visually impaired people must be enhanced. We cannot give the visually impaired people eyes capable of seeing the outside world, but we can give our love to make them feel bright inside.

The present invention has a special contribution. The visually impaired people can randomly acquire the acoustic information services (including basic necessities of life) of the related prompts at any time and at any place through the seamless connection between the communication terminal product supporting the interactive interconnected system and WIFI, effectively solving the technical blind spot of the worldwide information accessibility development.

### Embodiment 02

The combination of the interactive interconnected system technology of the present invention and the WIFI device can make a full use of the current resources (for example, bus stations, poster boards of bus shelters and public traffic signboards).

The front of the media-oriented product has embossing/debossing signs and a reflective sign.

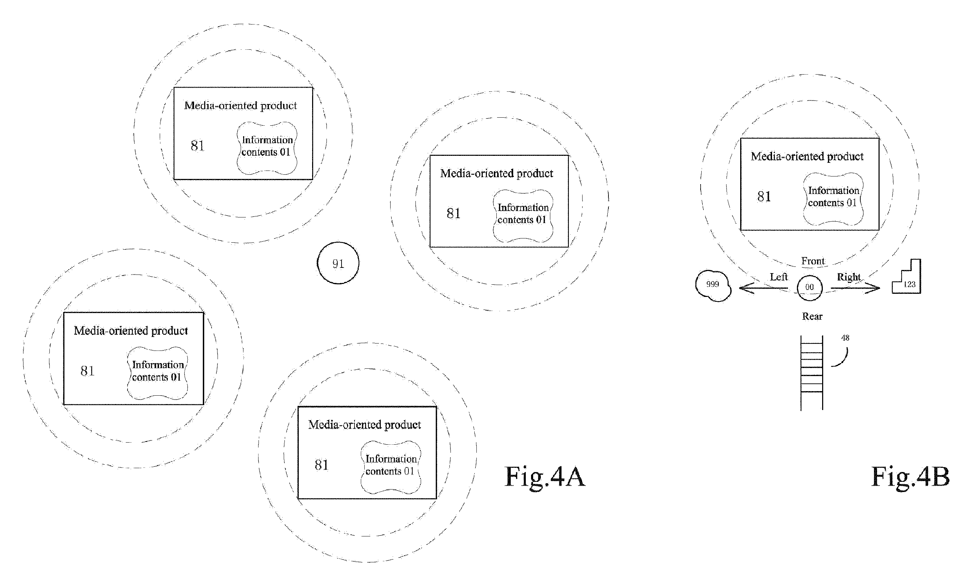

As shown in Figure 4A, the visually impaired people can acquire the data of the related media-oriented product through the embossing/debossing signs (Braille), and acquire the related traffic information and services through the smart phone supporting the interactive interconnected system.

Direction orientation is very difficult for the visually impaired people. The environmental introduction information acquired through the smart phone is the same no matter where the visually impaired people stand (360 degrees).

As shown in Figure 4B, a pit (999) is on the left; a step ladder (123) leading to the outside is on the right; in the rear, the visually impaired people receive the reflective light source of the reflective signs on the media-oriented product through the light-sensing device of the communication terminal product, and activates the interactive interconnected system operation of the communication terminal product.

The purpose is to ensure the visually impaired people have clear direction orientation, with use of the electronic information content (voice prompt) provided by the interactive interconnected system.

The front side of the media-oriented product has blind passageway traffic signs 48 for the visually impaired people.

The blind passageway traffic signs can also assist the visually impaired people to have clear direction orientation, with use of the electronic information content (voice prompt) provided by the interactive interconnected system.

### Embodiment 03

A smart phone is a common smart terminal product used by the visually impaired people. If multi-media programs can be added with a special broadcasting program for meeting the demands of the visually impaired people. The audio content of the broadcasting program introduces different products suitable for the visually impaired people. When a visually impaired person has demands for listening to a broadcast (or has an interest), he/she starts the associated operation key through the interactive interconnected system supporting seamless connection between the smart phone and WIFI (namely the first method of the present invention).

The visually impaired person can acquire (listen to) more information about the product (including details of the product description, prices, etc.) according to the electronic documents set by the associated data or perform further purchase procedures (including selection, payment, etc.).

Important (valuable) multimedia information signals are encrypted synthesis signals, which can be decomposed through a decryption program supporting the interactive interconnected system, thus achieving the protection effect.

The multimedia information data and the associated data are processed with an encrypted synthesis method.

Comparison between the present invention and the operation of acquiring the associated data through QR code patterns:
1. The smart phone is needed to be embedded with the interactive interconnected system support, which is identical with the QR code pattern solution.
2. The acquired associated data is more sensitive and accurate than those pictured by using the QR code pattern solution.
3. The acquired associated data is not affected by light.
4. The distance in which the associated data can be acquired can be set upon demands within dozens of meters, and the acquisition is very stable; the operable scope of the QR code pattern solution is about 1 m under normal conditions.

5. Digits are used to replace QR code patterns, capable of minimizing factors affecting the appearance of the poster board.

With reference to the effects of the above embodiments, the present invention is obviously prior to the others in the aspects of use, operation, manufacturing cost and transmission effect in comparison with the related technical solutions and product solutions available on the market. The development of the present invention will affect all kinds of business chains, and create brand-new business modes and value chains.

The above embodiments explain the present invention, but the scope of the present invention is not limited to the above embodiments. Within the concept of the present invention, the above components can be replaced by similar or equivalent elements known by those skilled in the field.

## Claims

1. A multimedia information signal supporting seamless connection between an interactive interconnected system and wireless fidelity (WIFI), wherein the multimedia information signal (01) is synthesized by associated data (12) and multimedia information data, **characterized in that**,
the interactive interconnected system consists of a multimedia information signal, an electronic reading device (02) and an electronic transmitter-receiver (03);
the multimedia information signal (01) is a combination of multimedia information data and associated data (12);
the multimedia information data supports a combination of digital data (08), video data (10), audio data (11) and programming data (15), etc.;
the associated data includes a URI (Uniform Resource Identifier) and associated data-oriented programming command;
the electronic reading device is comprised of a combination data reception circuit (21), a combination data decomposition circuit (22) and a transmission circuit (24); the combination data reception circuit is configured to receive the multimedia information signal; the combination data decomposition circuit (22) is configured to decompose the multimedia information signal into the multimedia information data and the associated data (12); the decomposed associated data is transmitted to the electronic transmitter-receiver via the transmission circuit (24);
the electronic transmitter-receiver is comprised of an associated data reception circuit (31), an associated data transmission circuit (32) and a central processing unit with a memory;
the associated data reception circuit (31) is equipped with a WIFIshort-distance signal transmission-reception circuit supported by a wireless fidelity (WIFI) device (91).

2. The multimedia information signal supporting seamless connection between an interactive interconnected system and wireless fidelity (WIFI) of claim 1, wherein,
the multiple replication and cyclic transmission are set for the associated data within reading time of the multimedia information data.

3. The multimedia information signal supporting seamless connection between an interactive interconnected system and wireless fidelity (WIFI) of claim 1, wherein,
the URI (Uniform Resource Identifier) is a URI supporting Internet connection.

4. The multimedia information signal supporting seamless connection between an interactive interconnected system and wireless fidelity (WIFI) of claim 1, wherein,
the URI (Uniform Resource Identifier) is communication data supporting connection with the telecommunication network.

5. The multimedia information signal supporting seamless connection between an interactive interconnected system and wireless fidelity (WIFI) of claim 1, wherein,
the associated data is set to read an electronic code (14), reading different electronic codes correspond to the different associated data, and the different associated data is set for the different URIs respectively.

6. The multimedia information signal supporting seamless connection between an interactive interconnected system and wireless fidelity (WIFI) of claim 1, wherein,
the associated address data is associated hybrid data (12M) capable of being mixed with content data such as characters, images, audio and video, and the associated hybrid data (12M) is decomposed into the associated data by an associated hybrid data decomposition circuit.

7. The multimedia information signal supporting seamless connection between an interactive interconnected system and wireless fidelity (WIFI) of claim 1, wherein,
the multimedia information signal is transmitted by a signal transmission station and a signal transmission transfer device.

8. The multimedia information signal supporting seamless connection between an interactive interconnected system and wireless fidelity (WIFI) of claim 1, wherein,
the multimedia information signal is stored in an electronic storage device, and is read by a multimedia electronic product supporting the interactive interconnected system.

9. The multimedia information signal supporting seamless connection between an interactive interconnected system and wireless fidelity (WIFI) of claim 1, wherein,
the electronic reading device is provided with a associated data-oriented program supporting storage and change of code data and password data of a wireless fidelity (WIFI) device;
the associated data-oriented programming command activates the associated data-oriented program; the associated data is processed and transformed to the orientation associated data (12A); and the orientation associated data 12A is transmitted by the short-distance signal transmission-reception circuit disposed in the transmission circuit.

10. The multimedia information signal supporting seamless connection between an interactive interconnected system and wireless fidelity (WIFI) of claim 1, wherein,
a communication terminal product receives the orientation associated data and processes the orientation associated data to wireless fidelity (WIFI) associated data (12B); and the wireless fidelity (WIFI) associated data (12B) is transmitted to wireless fidelity (WIFI) device by the short-distance signal transmission-reception circuit disposed in the transmission circuit.

11. The multimedia information signal supporting seamless connection between an interactive interconnected system and wireless fidelity (WIFI) of claim 1, wherein,
the multimedia information data and the associated data are processed with an encrypted synthesis method.
